Europäisches Patentamt

European Patent Office

Office européen des brevets

(19)

(11) Publication number : **0 632 295 A1**

(12) **EUROPEAN PATENT APPLICATION**

(21) Application number : **94304826.4**

(22) Date of filing : **01.07.94**

(51) Int. Cl.$^6$ : **G02B 5/18,** G02B 27/00

(30) Priority : **02.07.93 US 85355**

(43) Date of publication of application :
**04.01.95 Bulletin 95/01**

(84) Designated Contracting States :
**DE FR GB**

(71) Applicant : **XEROX CORPORATION**
**Xerox Square**
**Rochester New York 14644 (US)**

(72) Inventor : **Harris, Ellis D.**
**1646 Lynoak Drive**
**Claremont, CA 91711 (US)**

(74) Representative : **Reynolds, Julian David et al**
**Rank Xerox Ltd**
**Patent Department**
**Parkway**
**Marlow Buckinghamshire SL7 1YL (GB)**

(54) Phase apodization in a binary diffractive optical element.

(57)    Multilevel surface relief phase grating structures (14, 16) of a binary diffractive optical element (10) are vertically or perpendicularly offset from each other to induce a shift in phase from light beams (24) diffracted by the grating structures (14, 16). An offset of $\lambda$ / 2 (n-1) will cause a $\Pi$ shift in the phase between beams diffracted (26, 28) by two multilevel surface relief phase grating structures (14, 16). An offset of $\lambda$ / 4 (n-1) will cause a $\Pi$ / 2 shift in the phase between beams (26, 28) diffracted by two multilevel surface relief phase grating structures (14, 16).

*FIG. 1*

This invention relates to a binary diffractive optical element, and, more particularly, to a phase apodization in a binary diffractive optical element.

The propagation of a light beam can be changed by three basic means: reflection by a mirror, refraction by a lens and diffraction by a grating. Optical systems traditionally rely on reflection and refraction to achieve the desired optical transformation. Optical design, based on mirror and lens elements, is a well-established and refined process. Until recently, the problems with diffraction and fabricating high efficiency diffractive elements have made diffractive elements unfeasible components of optical systems.

The diffractive process does not simply redirect a light beam. Diffraction, unlike refraction and reflection, splits a light beam into many beams -- each of which is redirected at a different angle or order. The percentage of the incident light redirected by the desired angle into some given diffraction order is referred to as the diffraction efficiency for that order. The diffraction efficiency of a diffractive element is determined by the element's surface profile. If the light that is not redirected by the desired angle is substantial, the result will be an intolerable amount of scatter in the image or output plane of the optical system.

Theoretically, on-axis diffractive phase elements consisting of a grating having a given period can achieve 100 percent diffraction efficiency. To achieve this efficiency, however, a continuous phase profile within any given period is necessary. The theoretical diffraction efficiency of this surface profile is also relatively sensitive to a change in wavelength. By contrast, refractive elements are relatively wavelength insensitive. The technology for producing high quality, high efficiency, continuous phase profiles of the diffraction does not presently exist.

A compromise that results in a relatively high diffraction efficiency and ease of fabrication is a multi-level phase grating. The larger the number of discrete phase levels, the better the approximation of the continuous phase function. These multi-level phase profiles can be fabricated using standard semiconductor integrated circuit fabrication techniques.

As disclosed in *Binary Optics Technology: The Theory and Design of Multi-level Diffractive Optical Elements* by G.J. Swanson of the Lincoln Laboratory at the Massachusetts Institute of Technology, (Technical Report 854, 14 August 1989) and the resulting US-A-4,895,790, a fabrication process starts with a mathematical phase description of a diffractive phase profile and results in a fabricated multi-level diffractive surface. The first step is to take the mathematical phase expression and generate from it a set of masks that contain the phase profile information. The second step is to transfer the phase profile information from the masks into the surface of the element specified by the lens design.

The first step involved in fabricating the multi-level element is to mathematically describe the ideal diffractive phase profile that is to be approximated in a multi-level fashion. The next step in the fabrication process is to create a set of lithographic masks which are produced by standard pattern generators used in the integrated circuit industry.

A substrate of the desired material, such as Ge, ZnSe, Si, and $SiO_2$, is coated with a thin layer of photoresist. A first lithographic mask is then placed in intimate contact with the substrate and illuminated from above with an ultraviolet exposure lamp. Alternately, pattern generators, either optical or electron beam, can expose the thin layer of photoresist. The photoresist is developed, washing away the exposed resist and leaving the binary grating pattern in the remaining photoresist. This photoresist will act as an etch stop.

The most reliable and accurate way to etch many optical materials is to use reactive ion etching. The process of reactive ion etching anisotropically etches material at very repeatable rates. The desired etch depth can be obtained very accurately. The anisotropic nature of the process assures a vertical etch, resulting in a true binary surface relief profile. Once the substrate has been reactively ion etched to the desired depth, the remaining photoresist is stripped away, leaving a binary surface relief phase grating.

The process may be repeated using a second lithographic mask having half the period of the first mask. The binary phase element is recoated with photoresist and exposed using the second lithographic mask which has half the period of the first mask. After developing and washing away the exposed photoresist, the substrate is reactively ion etched to a depth half that of the first etch. Removal of the remaining photoresist results in a 4 level approximation to the desired profile. The process may be repeated a third and fourth time with lithographic masks having periods of one-quarter and one-eighth that of the first mask, and etching the substrates to depths of one-quarter and one-eighth that of the first etch. The successive etches result in elements having 8 and 16 phase levels. More masks than four might be used, however, fabrication errors tend to predominate as more masks are used.

This process is repeated to produce a multilevel surface relief phase grating structure in the substrate. The result is a discrete, computer-generated structure approximating the original idealized diffractive surface. For each additional mask used in the fabrication process, the number of discrete phase levels is doubled, hence the name "binary" optical element or, more precisely, a binary diffractive optical element.

After only four processing iterations, a 16 phase level approximation to the continuous case can be obtained. The process can be carried out in parallel, producing many elements simultaneously, in a cost-effective manner.

A 16 phase level structure achieves 99 percent diffraction efficiency. The residual 1 percent of the light is diffracted into higher orders and manifests itself as scatter. In many optical systems, this is a tolerable amount of scatter. The fabrication of the 16 phase level structure is relatively efficient due to the fact that only four processing iterations are required to produce the element.

After the first etching step, the second and subsequent lithographic masks have to be accurately aligned to the existing pattern on the substrate. Alignment is accomplished using another tool standard to the integrated circuit industry, a mask aligner.

As noted, the photoresist on the substrate can be exposed with an electron-beam pattern generator. The e-beam direct-write process eliminates masks and their corresponding alignment and exposure problems. Binary optics have also been reproduced using epoxy casting, solgel casting, embossing, injection molding and holographic reproduction.

Binary optical elements have a number of advantages over conventional optics. Because they are computer-generated, these elements can perform more generalized wavefront shaping than conventional lenses or mirrors. Elements need only be mathematically defined: no reference surface is necessary. Therefore, wildly asymmetric binary optics are able to correct aberrations in complex optical systems, and elements can be made wavelength-sensitive for special laser systems.

The diffractive optical elements are generally thinner, lighter and can correct for many types of aberrations and distortions. It is possible to approximate a continuous phase profile with a stepwise profile of discrete phase levels.

A light beam, particularly a laser beam, passing through an aperture of an optical system will often be sharply truncated at the input edges of a "hard "aperture. This severe truncation is difficult to avoid since it is desirable for the light beam to fill the aperture to transmit the maximum energy of the beam into the optical system. This sharp truncation manifests itself as diffraction causing severe spatial modulation of the beam's radial intensity profile. This diffraction causes self-focusing instability to the beam and may cause the beam to damage elements of the optical system.

"Soft" or apodizing apertures tailor the amplitude of the spatial intensity profile of the beam to minimize diffraction caused by the edges of the aperture and thus minimize self-focusing and minimize damage to optical elements while still maximizing aperture-filling and maximizing beam energy transmitted to the optical system.

A characteristic of these soft or apodizing aperture is a smooth, gradually varying optical transmittance to shape the amplitude of the light beam. Hard apertures typically have an abrupt, steep, transmittance gradients.

Liquid dye cells and shaped solid absorbers with varying thicknesses have been used as beam shapers. However, both systems are difficult to fabricate since they require highly aspherical glass. Both liquid dye cells and shaped solid absorbers also mandate the index of refraction of the dye and solid match the glass or distortions in the beam will occur. Both systems also are very thermally sensitive so that the beam itself passing through the dye or solid may generate heat causing distortions.

Optical density photographic plates and nonuniform metallic films can apodize an aperture. These two systems are expensive to fabricate with high quality components and are limited in application to low intensity beams. A single non-uniform dielectric layer film can be used as an aperture for high energy beams but the single layer film only provides limited apodization. Multiple dielectric layer films increase the apodization and further shape the beam but are difficult to fabricate since the thicknesses of the individual layers must be tightly controlled.

A Pockels Cells array can be used as an apodizing aperture. The Pockels Cells can readily and quickly shape a light beam but is limited in application to low intensity beams. A Faraday Rotator can shape high intensity beams but is costly to fabricate and large in size in comparison to the other elements of an optical system.

However, all these prior an apodizers constitute amplitude only apodizing systems. Previously, phase apodization of an aperture has not been possible.

An amplitude apodizer will apodize the incident light beam by transmitting a certain percentage of the incident light and either absorb, reflect or diffract the rest. A phase apodizer would apodize the incident light beam by transmitting all the light but introducing a phase delay or phase shift to a certain percentage of the incident light.

When phase is included in the apodization of the clear aperture of an optical element, functions can be achieved not possible with amplitude only apodization. For example, a sin (x)/ x function could be approximated wherein the negative lobes are achieved by a phase shift of $\Pi$.

There is a need for an apodizer that is both easy and inexpensive to fabricate, easy to use and can function over a wide range of intensity beams.

It is an object of this invention to provide a phase apodizing optical element, and a binary diffractive optical element to function as a phase apodizer.

In accordance with the present invention, there is provided a binary diffractive optical element for phase apodizing an incident light beam comprising: an optical substrate, and at least a first multilevel surface relief phase grating structure and a second multilevel surface relief phase grating structure upon said optical substrate wherein said second multilevel surface relief phase grating structure is spatially offset perpendicularly by a depth from said first multilevel surface relief phase grating structure such that a light beam diffracted from said second multilevel surface relief phase grating structure from said incident light beam is shifted in phase from a light beam diffracted from said first multilevel surface relief phase grating structure from said incident light beam.

Phase apodization is achieved in a binary diffractive optical element by perpendicularly or vertically offsetting at least two multilevel surface relief phase gratings relative to each other to induce a shift in phase from light beams diffracted by the grating structures. An offset of $\lambda$ / 2 (n-1) will cause a $\Pi$ shift in the phase between beams diffracted by two multilevel surface relief phase grating structures. An offset of $\lambda$ / 4 (n-1) will cause a $\Pi$ / 2 shift in the phase between beams diffracted by two multilevel surface relief phase grating structures.

Other objects and attainments together with a fuller understanding of the invention will become apparent and appreciated by referring to the following description and claims taken in conjunction with the accompanying drawings, in which:

Figure 1 is a schematic illustration of the cross-section side view of the phase apodization in a binary diffractive optical element formed according to the present invention;

Figure 2 is a schematic illustration of a desired far field amplitude distribution of a light beam;

Figure 3 is a schematic illustration of the required near field apodization to achieve the desired far field amplitude distribution of Figure 2; and

Figure 4 is a schematic illustration of the top view of a binary diffractive optical element for multiple phase apodization formed according to the present invention.

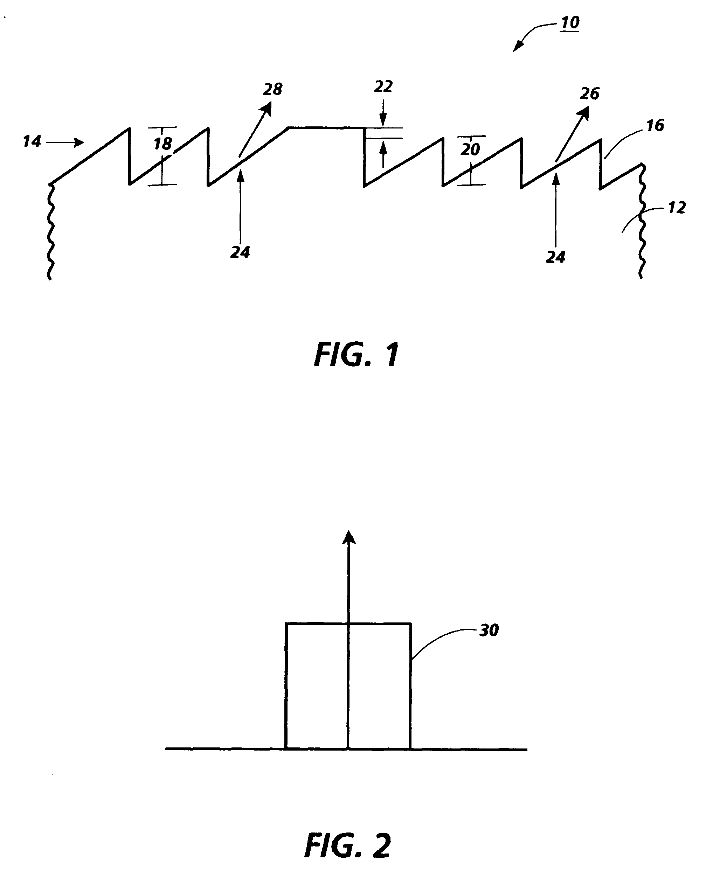

Reference is now made to Figure 1, wherein there is illustrated phase apodization in a binary diffractive optical element 10. The binary diffractive optical element has an optical substrate 12 of $SiO_2$ upon which is a first multilevel surface relief phase grating structure 14 and a second multilevel surface relief phase grating structure 16. The first multilevel surface relief phase grating structure 14 upon the optical substrate 12 forms a plurality of blazed gratings. The second multilevel surface relief phase grating structure 16 upon the optical substrate 12 also forms a plurality of blazed gratings.

The maximum etch depth 18 of the first multilevel surface relief phase grating structure 14 is

$$d_{max\ 1} = \lambda / n - 1 \quad \text{(Equation 1)}$$

where n is the index of refraction of the optical substrate 12 and $\lambda$ is the wavelength of the incident light beam in air. The maximum etch depth 20 of the second multilevel surface relief phase grating structure 16 is also determined by Equation 1.

The first multilevel surface relief phase grating structure 14 or the reference grating structure is offset perpendicularly from the surface of the optical substrate from the second multilevel surface relief phase grating structure 16. This perpendicular or vertical offset, in structural terms of the binary diffractive optical element 10, means the optical substrate 12 is thicker beneath the first multilevel surface relief phase grating structure 14 than beneath the second multilevel surface relief phase grating structure 16.

The second multilevel surface relief phase grating structure 16 will be spatially offset by a depth 22 from the first multilevel surface relief phase grating structure 14 where

$$d_{offset} = \lambda / 2(n - 1) \quad \text{(Equation 2)}$$

where n is the index of refraction of the optical substrate 12 and $\lambda$ is the wavelength of the incident light beam in the air.

The offset of $\lambda$ / 2(n-1) between the two multilevel surface relief phase grating structures causes a $\Pi$ shift in the phase between beams diffracted by the two multilevel surface relief phase grating structures 14 and 16. Thus, light beam 24 which passes through the optical substrate 12 is incident upon the binary diffractive optical element 10 formed on the surface of the substrate. The second multilevel surface relief phase grating structure 16 will form a diffracted light beam 26. The first multilevel surface relief phase grating structures 14 will form a diffracted light beam 28.

Both diffracted light beams are diffracted from the same incident beam 24. Both diffracted light beams 26 and 28 are diffracted at the same angle since the period and the grating structures 14 and 16 are the same. However, diffracted light beam 26 which is diffracted by the second multilevel surface relief phase grating structure 16 will be phase shifted by $\Pi$ from diffracted light beam 28 which is diffracted by the first multilevel phase surface relief phase structure 14 due to the offset 22.

The amplitude of the diffracted beam 26 from the offset second multilevel surface relief phase grating structure is out of phase from the non-offset diffracted beam 28. In terms of its complex amplitude, the value of the diffracted beam 26 is "negative" in comparison to the diffracted beam 28 which has a "positive" amplitude, since their phases differ by $\Pi$.

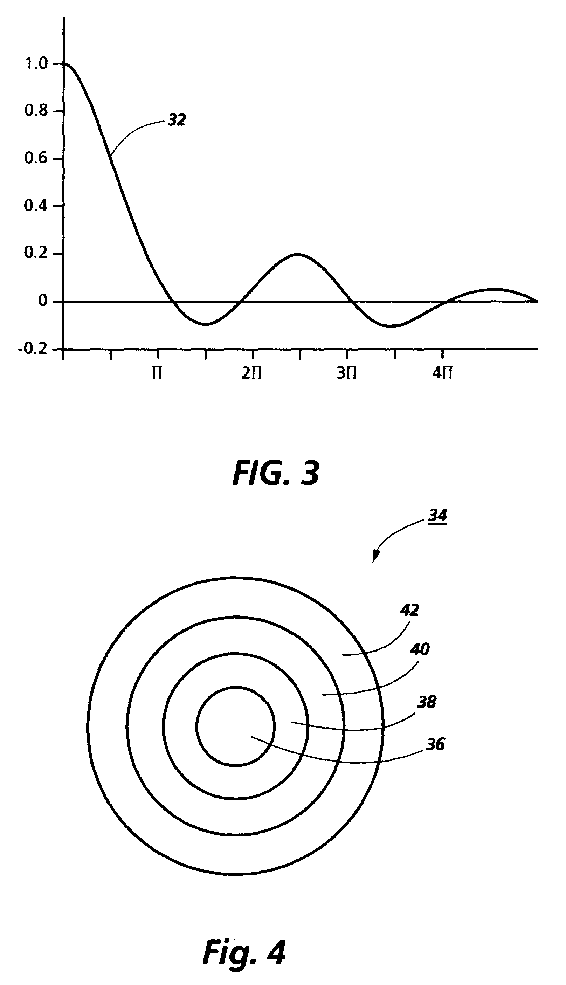

The control of phase, including the sign of the complex order amplitude is necessary if an apodization in a near field aperture is to achieve certain far field amplitude distributions. To achieve the desired square far field amplitude distribution 30 of Figure 2, the near field apodization required would need to be a sin (x)/ x function as illustrated by the diminishing sinusoidal line 32 of Figure 3 wherein the negative lobes can be produced by incident optical amplitude and phase shifted in accordance with this invention.

A second multilevel surface relief phase grating structure might be spatially offset perpendicularly by a depth, $d_{offset}$, from a first multilevel surface relief phase grating structure to cause a $\Pi / 2$ shift in the phase between beams diffracted by the two multilevel surface relief phase grating structures where

$$d_{offset} = \lambda / 4(n - 1) \quad \text{(Equation 3)}$$

where n is the index of refraction of the optical substrate and $\lambda$ is the wavelength of the incident light beam in air.

The general rule for a m $\Pi$ phase shift between beams diffracted by two multilevel surface relief phase grating structures, where m is any whole number or fraction of a whole number, is the necessary perpendicular spatial offset, $d_{offset}$, between the two multilevel surface relief phase grating structures is

$$d_{offset} = m(\lambda / 2(n - 1)) \quad \text{(Equation 4)}$$

where n is the index of refraction of the optical substrate and $\lambda$ is the wavelength of the incident light beam in air.

As shown in Figure 4, the binary diffractive optical element 34 can have a plurality of multilevel surface relief phase grating structures 36, 38, 40 and 42. The phase of a diffracted beam (not shown) from the binary diffractive optical element 34 can be shifted for the entire spatial profile of the beam.

The first and second multilevel surface relief phase grating structures are merely illustrative examples. A plurality of multilevel surface relief phase grating structures, each with different offsets can be fabricated to phase shift different portions of the beam diffracted by the binary diffractive optical element. The plurality of multilevel surface relief phase grating structures of a binary diffractive optical element need not be concentric, nor symmetric. The plurality of multilevel surface relief phase grating structures of a binary diffractive optical element can alter the phase of an incident light beam across the entire spatial profile of the light beam.

The optical substrate 12 can also be formed of materials such as Ge, ZnSe, Si, GaAs, and $SiO_2$.

## Claims

1. A binary diffractive optical element for phase apodizing an incident light beam comprising

an optical substrate, and

at least a first multilevel surface relief phase grating structure and a second multilevel surface relief phase grating structure upon said optical substrate wherein said second multilevel surface relief phase grating structure is spatially offset perpendicularly by a depth from said first multilevel surface relief phase grating structure such that a light beam diffracted from said second multilevel surface relief phase grating structure from said incident light beam is shifted in phase from a light beam diffracted from said first multilevel surface relief phase grating structure from said incident light beam.

2. The optical element of claim 1 wherein the offset depth, d, between said second multilevel surface relief phase grating structure and said first multilevel surface relief phase diffractive grating is

$$d = \lambda / 2(n - 1)$$

where n is the index of refraction of said optical substrate and $\lambda$ is the wavelength of said incident light beam in air.

3. The optical element of claim 1 wherein the offset depth, d, between said second multilevel surface relief phase grating structure and said first multilevel surface relief phase diffractive grating is

$$d = \lambda / 4(n - 1)$$

where n is the index of refraction of said optical substrate and $\lambda$ is the wavelength of said incident light beam in air.

4. The optical element of claim 1 wherein the offset depth, d, between said second multilevel surface relief phase grating structure and said first multilevel surface relief phase diffractive grating is

$$d = m(\lambda / 4(n - 1))$$

where m is the phase shift in terms of $\Pi$, n is the index of refraction of said optical substrate and $\lambda$ is the wavelength of said incident light beam in air.

**FIG. 1**

**FIG. 2**

**FIG. 3**

**Fig. 4**

7

**European Patent Office**

## EUROPEAN SEARCH REPORT

Application Number

EP 94 30 4826

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 476 931 (CANON K.K.) * page 5, line 39 - line 56; figures 3,7,19 * | 1-4 | G02B5/18 G02B27/00 |
| A | US-A-4 105 289 (HERSHEL) * column 6, line 24 - line 50; figure 7 * | 1,2 | |
| A | SOVIET PATENTS ABSTRACTS Section PQ, Week 9138, 6 November 1991 Derwent Publications Ltd., London, GB; Class P81, AN 91-279279 & SU-A-1 601 600 (BALASHOVA E N) 23 October 1990 * abstract * | 1 | |
| A | WO-A-91 12551 (MASSACHUSETTS INSTITUTE OF TECHNOLOGY) * page 9; figures 2,5 * | 1 | |
| A | PATENT ABSTRACTS OF JAPAN vol. 11, no. 194 (P-588) 23 June 1987 & JP-A-62 018 502 (TOSHIBA) 27 January 1987 * abstract * | 1 | TECHNICAL FIELDS SEARCHED (Int.Cl.6) G02B |

The present search report has been drawn up for all claims

| Place of search | Date of completion of the search | Examiner |
|---|---|---|
| BERLIN | 6 October 1994 | von Moers, F |

EPO FORM 1503 03.82 (P04C01)